# EUROPÄISCHE PATENTSCHRIFT

(11) **EP 2 391 582 B1**
(45) Veröffentlichungstag und Bekanntmachung des Hinweises auf die Patenterteilung: **06.07.2016**
(21) Anmeldenummer: 09775833.8
(22) Anmeldetag: 29.01.2009
(51) Int. Cl.: C01C 1/04, B01J 8/04

(54) **VORRICHTUNG UND VERFAHREN ZUR SYNTHESE VON AMMONIAK**
APPARATUS AND METHOD FOR THE SYNTHESIS OF AMMONIA
DISPOSITIF ET PROCÉDÉ DE SYNTHÈSE DE L'AMMONIAQUE

(43) Veröffentlichungstag der Anmeldung: 07.12.2011
(73) Patentinhaber: Ungar, Gert, 60598 Frankfurt am Main (DE); Ungar, Jürg Dieter, 60598 Frankfurt am Main (DE)
(72) Erfinder: Ungar, Gert, 60598 Frankfurt am Main (DE); Ungar, Jürg Dieter, 60598 Frankfurt am Main (DE)
(74) Vertreter: Drobnik, Stefanie
(86) Internationale Anmeldenummer: PCT/DE2009/000111
(87) Internationale Veröffentlichungsnummer: WO 2010/085926

(56) Entgegenhaltungen:
- EP-A1- 1 661 860
- EP-A2- 1 385 785
- GB-A- 1 096 313

## Beschreibung

Die Erfindung betrifft ein Verfahren und eine Vorrichtung zur Synthese von Ammoniak aus einem stickstoff- und wasserstoffhaltigen Synthesegas.

### STAND DER TECHNIK

Die Synthese von Ammoniak nach dem Haber-Bosch-Verfahren aus Stickstoff und Wasserstoff erfolgt zumeist an Eisenoxid-Mischkatalysatoren bei etwa 150 bis 300 bar Druck und einer Temperatur im Bereich von 350 bis 530 °C. Die Jahresproduktion von Ammoniak liegt derzeit bei ungefähr 125 Millionen Tonnen, deren Herstellung etwa 3 % des Weltenergieverbrauchs ausmachen. Die Ammoniak-Austrittskonzentration unter industriellen Reaktionsbedingungen beträgt häufig nur 13 bis 20 %. Theoretisch liegt die Gleichgewichtskonzentration nach Nielsen bei 38,82 % für Reaktionsbedingungen bei 200 atm und 400 °C und inertgasfreiem Synthesegas. Kann durch Anwendung eines aktiven Katalysators die Reaktionstemperatur gesenkt werden, so erhöhen sich die Gleichgewichtskonzentration und damit auch eine theoretisch erreichbare Konzentration.

EP 13 857 85 beschreibt ein Verfahren zum Herstellen von Ammoniak an einem körnigen Katalysator, wobei unreagiertes Synthesegas aus Stickstoff und Wasserstoff durch ein erstes ungekühltes Katalysatorbett und anschließend als teilreagiertes Synthesegas durch einen Wärmetauscher geleitet wird. Daraufhin wird das teilreagierte Synthesegas durch zumindest zwei weitere gekühlte Katalysatorbetten geleitet. Die Kühlung erfolgt dabei, indem unreagiertes Synthesegas vor der Einspeisung in das erste ungekühlte Katalysatorbett durch Kühlrohre geleitet wird, die in den gekühlten Katalysatorbetten angeordnet sind. Dabei lässt man das unreagierte Synthesegas zuerst durch die Kühlröhren des letzten Katalysatorbettes strömen und anschließend durch das vorletzte. Mit diesem Verfahren kann bei einem Druck von 150 bar eine Ammoniakkonzentration im Produktgas von 29,5 Vol.-% erreicht werden, indem in den gekühlten Katalysatorbetten ein Temperaturprofil bereitgestellt wird, das der optimalen Temperaturkurve ähnelt.

In der DE 603 04 257 T2 ist ein Verfahren zur Synthese von Ammoniak offenbart, wobei das Synthesegas mit einem oder mehreren Katalysatoren in Kontakt gebracht wird, von denen zumindest einer mit aufgetragenem

### BESTÄTIGUNGSKOPIE

Ruthenium auf einem Nitrid auf einer sekundären Unterlage aufgetragen ist. Dieses Verfahren ist für Anlagen mit großen Kapazitäten und hohen Drücken geeignet und senkt den spezifischen Energieverbrauch.

### OFFENBARUNG

Ausgehend von diesem Stand der Technik liegt der vorliegenden Erfindung die Aufgabe zugrunde, eine verbesserte Vorrichtung und ein verbessertes Verfahren zur Synthese von Ammoniak bereitzustellen. Diese Aufgabe wird durch eine Vorrichtung mit den Merkmalen des unabhängigen Anspruchs 1 und durch ein Verfahren mit den Merkmalen des unabhängigen Anspruchs 7 gelöst. Weiterbildungen sind in den Unteransprüchen ausgeführt.

Die erfindungsgemäße Vorrichtung zur Synthese von Ammoniak aus einem Stickstoff (N₂) und Wasserstoff (H₂) enthaltenden Synthesegas umfasst einen Reaktor, der eine erste ungekühlte Katalysatorbetteinheit sowie zumindest eine Wärmetauschervorrichtung enthält. In dem sind ferner zwei gekühlte Katalysatorbetteinheiten enthalten. Die Kühlfläche wird durch mehrere Kühlrohre geschaffen, sie wird nachfolgend auch als "Kühleinheit" bezeichnet. Mit diesen Kühleinheiten sind die gekühlten Katalysatorbetteinheiten ausgestattet. Eine Kreislaufleitung verläuft ausgehend von einer oder mehreren Zuführvorrichtungen für Synthesegas zunächst in diese Kühleinheiten und weiter zu dem ersten ungekühlten Katalysatorbett und anschließend zu der Wärmetauschervorrichtung. Von dort erstreckt sich die Kreislaufleitung durch die zumindest zwei gekühlten Katalysatorbetteinheiten bis zu der Auslassvorrichtung oder den Auslassvorrichtungen, falls mehrere vorgesehen sind, an denen Ammoniak (NH₃) durch Kondensation aus dem Produktgas abgetrennt wird.

Nicht reagierter Stickstoff und Wasserstoff aus dem Produktgas wird in die Kreislaufleitung zurückgeführt und frischer Stickstoff und Wasserstoff wird dem Synthesegas zugemischt. Um die Kühlleistung der Kühleinheiten, beziehungsweise der Mehrzahl von Kühlrohren in den gekühlten Katalysatorbetteinheiten zu regeln, ist parallel zu den Kühleinheiten erfindungsgemäß wenigstens eine Bypassleitung angeordnet, die nach der Zuführvorrichtung von der Kreislaufleitung abzweigt und vor der ersten ungekühlten Katalysatorbetteinheit wieder mit der Kreislaufleitung vereinigt wird.

Weiterhin ist vorgesehen, dass die Kühlrohre, die jeweils eine Kühleinheit mit einer Kühlfläche für eine gekühlte Katalysatorbetteinheit bereitstellen, jeweils an den Auslassenden der Kühlrohre eine Austrittssammelvorrichtung aufweisen, in der das Synthesegas gesammelt und zu der nächsten Kühleinheit oder zu der ersten ungekühlten Katalysatorbetteinheit weitergeleitet wird. Jede dieser Austrittssammelvorrichtungen ist jeweils mit einer Bypassleitung verbunden. Damit ist es möglich, je nach Katalysatorart und -aktivität, das Temperaturprofil jeder gekühlten Katalysatorbetteinheit optimal für die Ammoniaksynthese anzupassen, indem die Kühlleistung der Kühleinheiten über eine Bypassregelung variiert werden kann. Die herkömmlichen Anlagen zur Synthese von Ammoniak sind jeweils nur für einen Katalysator mit definierter Aktivität ausgelegt: Es ist nicht möglich, einen Katalysator mit höherer Aktivität einzusetzen, da die dafür erforderliche Kühlleistung mit der bestehenden Kühlfläche nicht erreicht werden kann. Sinkt hingegen die Aktivität des Katalysators über die Laufzeit, ist die Kühlleistung zu hoch und das Katalysatorbett wird zu stark abgekühlt. Dies kann durch den Einsatz der Bypassleitungen verhindert werden, die eine Variation der Kühlleistung gestatten, indem ein Teil des als Kühlmedium fungierenden Synthesegases nicht durch die Mehrzahl von Kühlrohren, sondern durch die Bypassleitung geleitet wird.

Eine Steuereinrichtung sorgt für die Verteilung des Synthesegases aus der Zuführvorrichtung zwischen den Bypassleitungen und der Mehrzahl von Kühlrohren, indem eine Verteilereinrichtung die Synthesegaszufuhr regelt. Dabei ist die Steuereinrichtung mit einem Sensor zur Erfassung eines Verfahrensparameters gekoppelt, so dass die Verteilereinrichtung in Abhängigkeit des Verfahrensparameters geregelt wird. Dieser Parameter ist die Austrittstemperatur der gekühlten Katalysatorbetteinheiten, was ermöglicht, das Temperaturprofil jeder gekühlten Katalysatorbetteinheit auf das optimale Temperaturprofil zur Ammoniaksynthese einzustellen. Dies ermöglicht eine effiziente Nutzung der Katalysatorkapazitäten, wodurch letztendlich Energie eingespart werden kann.

In einer vorteilhaften Ausführungsform der erfindungsgemäßen Vorrichtung wird ein Fluidpfad für das Synthesegases durch die Kreislaufleitung bereitgestellt, der sich ausgehend von der Zuführvorrichtung zuerst durch die Mehrzahl von Kühlrohren der stromabwärts gelegenen letzten gekühlten Katalysatorbetteinheit und danach durch die Mehrzahl von Kühlrohren der jeweils nächsten stromaufwärts gelegenen Katalysatorbetteinheit erstreckt.

Weiterhin ist vorgesehen, dass die erste ungekühlte Katalysatorbetteinheit ein in dem ersten Reaktor angeordnetes, erstes ungekühltes Katalysatorbett sein kann. Alternativ dazu kann die erste ungekühlte Katalysatorbetteinheit in einem weiterer Reaktor angeordnet sein, der zumindest ein erstes ungekühltes Katalysatorbett umfasst. Dies kann ein herkömmlicher, bestehender Reaktor sein, der mehrere ungekühlte Katalysatorbetten aufweist, zwischen denen eine indirekte Kühlung angeordnet sein kann. Mit einem solchen herkömmlichen Reaktor können lediglich Ammoniakaustrittskonzentrationen von ca. 20 Vol.-% erreicht werden. Um die Ausbeute zu erhöhen, kann erfindungsgemäß diesem bestehenden Reaktor ("zweiter Reaktor"), der die erste ungekühlte Katalysatorbetteinheit bildet, die zumindest zwei gekühlten Katalysatorbetteinheiten, die in dem "ersten" Reaktor angeordnet sind, nachgeschaltet werden.

Ferner ist in einer Ausführungsform vorgesehen, dass die zumindest eine Wärmetauschervorrichtung entweder eine erste der gekühlten Katalysatorbetteinheiten ist, die somit gleichzeitig als Wärmetauscher und Reaktionsort dient, oder ein Wärmetauscher ist, der innerhalb oder außerhalb des ersten Reaktors angeordnet sein kann. Denkbar ist auch, dass als Wärmetauschervorrichtung ein weiterer Reaktor vorgesehen ist, der in dem Fall, dass die erste ungekühlte Katalysatorbetteinheit ein in dem ersten Reaktor angeordnetes Katalysatorbett ist, einen zweiten Reaktor der Vorrichtung darstellt. Für den Fall, dass, wie oben ausgeführt, die die ungekühlte Katalysatorbetteinheit in einem zweiten Reaktor angeordnet ist, bildet der Wärmetauscherreaktor einen dritten Reaktor. Dabei kann dieser zusätzliche Reaktor ein gekühlter, mit Katalysator gefüllter Rohrreaktor sein.

In einer weiteren Ausführungsform der erfindungsgemäßen Vorrichtung umfasst zumindest die in der Kreislaufleitung stromabwärts gesehene letzte gekühlte Katalysatorbetteinheit einen Katalysator mit einer Aktivität, die zumindest das doppelte, vorzugsweise das Fünffache und am stärksten bevorzugt mehr als das Siebenfache der Aktivität eines herkömmlichen Eisenkatalysators beträgt. Ein solcher Katalysator kann ein Barium-aktivierter Ruthenium-Katalysator sein.

Die Anzahl der gekühlten Katalysatorbetteinheiten liegt bei zwei oder mehr gekühlten Katalysatorbetteinheiten und kann durch den Fachmann bei der Auslegung der Synthesevorrichtung festgelegt werden. Insbesondere kann die Anzahl der gekühlten Katalysatorbetteinheiten bis zu vier betragen, bevorzugt sind jedoch drei gekühlte Katalysatorbetteinheiten.

Weiterhin betrifft die Erfindung ein Verfahren zur Synthese von Ammoniak aus einem Stickstoff und Wasserstoff enthaltenden Synthesegas in der erfindungsgemäßen Vorrichtung, die zumindest einen Reaktor mit gekühlten Katalysatorbetten aufweist. Dabei erfolgt zunächst die Zuführung von Stickstoff und Wasserstoff als Synthesegas durch die Zuführvorrichtung in die Kreislaufleitung. Das Synthesegas wird durch die Kühleinheiten, beziehungsweise durch die Mehrzahl von Kühlrohren der gekühlten Katalysatorbetteinheiten geleitet, wobei die Temperatur des Synthesegases zunimmt. Das erwärmte Synthesegas wird in die ungekühlte Katalysatorbetteinheit geleitet, wo es teilweise zu Ammoniak reagiert, so dass ein teilreagiertes Synthesegas entsteht, das Ammoniak in einer ersten Austrittskonzentration enthält. Diese erste Austrittskonzentration kann einem Volumenanteil von 5 bis 25 % entsprechen. Danach wird das teilreagierte Synthesegas, dessen Temperatur weiter angestiegen ist, in der zumindest einen Wärmetauschervorrichtung abkühlen gelassen. Nun wird das teilreagierte Synthesegas in die gekühlten Katalysatorbetteinheiten geleitet, wobei Stickstoff und Wasserstoff weiter zu Ammoniak reagieren und dadurch ein Produktgas gebildet wird, das Ammoniak in einer zweiten Austrittskonzentration enthält. Diese Produktgas-Austrittskonzentration kann bei Verwendung eines hochaktiven Katalysators wie dem Rutheniumkatalysator bei 100 bar über 30 Vol.-% erreichen. Um eine Ammoniak-Austrittskonzentration von insbesondere bis zu 40 Vol.-% zu erreichen, kann eine Druckerhöhung notwendig werden.

Zuletzt erfolgt die Ausleitung des Produktgases an der Auslassvorrichtung, um Ammoniak abzutrennen. Unreagierter Stickstoff und Wasserstoff aus dem Produktgas werden vor der Zuführvorrichtung zurückgeführt, mit nicht rezykliertem frischen Stickstoff und Wasserstoff vermischt und als Synthesegas in der Kreislaufleitung zur Verfügung gestellt.

Zur Regelung des Temperaturverlaufs in den gekühlten Katalysatorbetteinheiten wird ein Anteil des Synthesegases durch die zumindest eine Bypassleitung parallel zu einem Restanteil des Synthesegases durch die Kühleinheiten geleitet werden. Eine durch zumindest eine Steuereinrichtung angesteuerte Verteilereinrichtung dient zur Aufteilung des Synthesegasstroms in die Bypassleitung und die Kühleinheiten. Die Steuereinrichtung ist als eine Regeleinrichtung ausgebildet, die über einen operativ gekoppelten Sensor zumindest einen Parameter des Verfahrens erfasst, der jeweils eine Austrittstemperatur der gekühlten Katalysatorbetteinheiten ist. Damit regelt die Steuereinrichtung den Anteil des Synthesegases, der in die Bypassleitungen geleitet wird. Dadurch ist es möglich, das Temperaturprofil in den gekühlten Katalysatorbetten jeweils dem Temperaturprofil anzupassen, das für die Ammoniaksynthese für den jeweiligen Druck und den verwendeten Katalysator optimiert ist. Darüber hinaus kann die Kühlleistung während der Laufzeit des Katalysators dessen nachlassender Aktivität angepasst werden, so dass bei sinkender Aktivität des Katalysators auch die Kühlleistung, respektive der Anteil des Synthesegases durch die Kühleinheiten gesenkt werden kann, damit die Reaktionsgeschwindigkeit nicht zu stark gemindert wird oder sogar die Reaktion ganz zum Erliegen kommt.

Zudem ist es bei einer Neuauslegung eines Reaktors denkbar, die Kühlflächen der gekühlten Katalysatorbetteinheiten überzudimensionieren, so dass es möglich ist, in diesem Reaktor in Zukunft einen Katalysator einzusetzen, der eine noch viel höhere Aktivität aufweist. Für die gegenwärtig verfügbaren Katalysatoren kann die Kühlleistung über die Bypassleitungen eingestellt werden, so dass für den jeweiligen Katalysator das optimale Temperaturprofil ausgebildet wird. Dies trägt zu einer Optimierung des Ammoniakherstellungsprozesses bei, so dass unter Umständen mit einer kleineren Katalysatormenge eine höhere Ausbeute erreicht werden kann. Gleichzeitig kann die Tagesproduktion an Ammoniak erhöht werden, wenn ausreichend Synthesegas erzeugt werden kann.

Das erfindungsgemäße Verfahren kann in einem Druckbereich zwischen 30 und 300 bar sowie einem Temperaturbereich zwischen 100 und 600 °C durchgeführt werden. Bevorzugt ist der Druckbereich zwischen 100 und 250 bar. Die Temperatur des Synthesegases vor der Einleitung in die erste ungekühlte Katalysatorbetteinheit soll zwischen 150 und 500 °C liegen.

In einer Ausführungsform des erfindungsgemäßen Verfahrens wird das Synthesegas durch die Kühleinheiten im Gleichstrom mit dem teilreagierten Synthesegas in den Katalysatorbetteinheiten geleitet. Alternativ kann das Synthesegas in den Kühleinheiten im Gegenstrom zu dem teilreagierten Synthesegas in den gekühlten Katalysatorbetteinheiten geleitet werden. Besonders vorteilhaft kann in einer Ausführungsform das Synthesegas durch die Kühleinheiten in einer Kombination von Gleich- und Gegenstrom zu dem teilreagierten Synthesegas in den gekühlten Katalysatorbetteinheiten geleitet werden, wobei besonders bevorzugt ist, das Synthesegas durch die Kühleinheit der ersten Katalysatorbetteinheit im Gegenstrom zu dem teilreagierten Synthesegas durch die erste Katalysatorbetteinheit zu führen, während das Synthesegas durch die Kühleinheiten der übrigen Katalysatorbetteinheiten im Gleichstrom mit dem teilreagierten Synthesegas durch diese Katalysatorbetteinheiten geleitet wird.

Dabei kann in einer Ausführungsform des Verfahrens das Synthesegas zunächst durch die Kühleinheit der stromabwärts gelegenen letzten gekühlten Katalysatorbetteinheit geleitet werden, und daraufhin jeweils durch die Kühleinheiten der jeweils nächsten stromaufwärts gelegenen Katalysatorbetteinheit.

Weiterhin besteht eine vorteilhafte Ausführungsform darin, dass durch das Leiten und Abkühlen lassen des teilreagierten Synthesegases in einer Wärmetauschervorrichtung Hochdruckdampf mit einem Druck von 50 bis 140 bar erzeugt wird.

Schließlich sieht das erfindungsgemäße Verfahren vor, dass zumindest in der stromabwärts gelegenen letzten gekühlten Katalysatorbetteinheit die Reaktion des teilreagierten Synthesegases an einem Katalysator stattfindet, dessen Aktivität zumindest das Doppelte, vorzugsweise das Fünffache und am stärksten bevorzugt mehr als das Siebenfache der Aktivität eines herkömmlichen Eisenkatalysators beträgt. Ein solcher hochaktiver Katalysator kann beispielsweise ein Barium-aktivierter Rutheniumkatalysator sein.

### KURZE BESCHREIBUNG DER FIGUREN

Weitere Ausführungsbeispiele, sowie einige der Vorteile, die mit diesen und weiteren Ausführungsbeispielen verbunden sind, werden durch die nachfolgende ausführliche Beschreibung deutlich und besser verständlich. Unterstützend hierbei ist auch der Bezug auf die Figuren in der Beschreibung. Gegenstände oder Teile derselben, die im Wesentlichen gleich oder sehr ähnlich sind, können mit denselben Bezugszeichen versehen sein.
Fig. 1 zeigt eine schematische Ansicht einer erfindungsgemäßen Vorrichtung zur Synthese von Ammoniak in einem Reaktor mit drei gekühlten und einem ungekühlten Katalysatorbett,
Fig. 2 zeigt skizzenhaft eine Ausführungsform der Erfindung mit einem herkömmlichen bestehenden Ammoniakreaktor, dem ein erfindungsgemäßer "erster" Reaktor mit zwei gekühlten Katalysatorbetteinheiten nachgeschaltet wurde,
Fig. 3 zeigt in einem Diagramm Temperaturkurven und Reaktionsgeschwindigkeit in einem ungekühlten Katalysatorbett bei einer erfindungsgemäßen Betriebsvariante (Variante 3 aus Tabelle 1),
Fig. 4 zeigt in einem Diagramm Temperaturkurven und Reaktionsgeschwindigkeit in einem ersten gekühlten Katalysatorbett bei einer erfindungsgemäßen Betriebsvariante (Variante 3 aus Tabelle 1),
Fig. 5 zeigt in einem Diagramm Temperaturkurven und Reaktionsgeschwindigkeit in einem zweiten gekühlten Katalysatorbett bei einer erfindungsgemäßen Betriebsvariante (Variante 3 aus Tabelle 1),
Fig. 6 zeigt in einem Diagramm Temperaturkurven und Reaktionsgeschwindigkeit in einem dritten gekühlten Katalysatorbett bei einer erfindungsgemäßen Betriebsvariante (Variante 3 aus Tabelle 1).

Das erfindungsgemäße Verfahren zur Synthese von Ammoniak aus einem Stickstoff N₂ und Wasserstoff H₂ enthaltenden Synthesegas kann in einer Vorrichtung, die aus zumindest einem ersten Reaktor besteht, durchgeführt werden. Dabei umfasst die Vorrichtung eine erste ungekühlte Katalysatorbetteinheit, zumindest eine Wärmetauschervorrichtung sowie zumindest zwei gekühlte Katalysatorbetteinheiten. Die Kühlung einer Katalysatorbetteinheit erfolgt mit einer Mehrzahl von Kühlrohren, die jeweils in einer Katalysatorbetteinheit angeordnet ist, und nachfolgend auch als "Kühleinheit" bezeichnet wird. Das Synthesegas wird ausgehend von einer Zuführvorrichtung in eine Kreislaufleitung geleitet, und strömt zunächst durch die den gekühlten Katalysatorbetteinheiten zugeordnete Kühleinheiten, wodurch das Synthesegas Wärme aufnimmt. Das erwärmte Synthesegas strömt dann durch die erste ungekühlte Katalysatorbetteinheit, in der eine teilweise Reaktion von Stickstoff und Wasserstoff zu Ammoniak stattfindet. Das nun teilreagierte Synthesegas mit einer ersten Austrittskonzentration weist eine deutlich erhöhte Temperatur auf und wird durch eine Wärmetauschervorrichtung geleitet, um das teilreagierte Synthesegas abzukühlen. Von hier gelangt das teilreagierte Synthesegas zu den gekühlten Katalysatorbetteinheiten, in denen die Weiterreaktion von Stickstoff und Wasserstoff zu Ammoniak bis zu einer zweiten Ammoniakaustrittskonzentration abläuft. Das hiermit entstandene Produktgas wird zu einer Auslassvorrichtung geleitet, wo Ammoniak aus dem Produktgas auskondensiert und abgezogen wird, während nicht reagierter Stickstoff und Wasserstoff zusammen mit frischem Stickstoff und Wasserstoff als Synthesegas in die Kreislaufleitung durch die Zuführvorrichtung gespeist werden.

Um nun das Temperaturprofil in den jeweiligen gekühlten Katalysatorbetten für die Ammoniaksynthese zu optimieren, weist die Kreislaufleitung zumindest eine Bypassleitung auf, die zwischen der Zuführvorrichtung und der ersten ungekühlten Katalysatorbetteinheit parallel zu den durch die zumindest zwei gekühlten Katalysatorbetteinheiten verlaufenden Kühleinheiten angeordnet ist. Dabei sind mehrere Bypassleitungen vorgesehen so dass jeweils eine Bypassleitung in einer Austrittsammelvorrichtung einer Kühleinheit eines ungekühlten Katalysatorbettes mündet, oder dass die Bypassleitung direkt von der Zuführvorrichtung zu der ersten ungekühlten Katalysatorbetteinheit verläuft. Der Anteil an Synthesegas, der durch die Bypassleitung, beziehungsweise die Anteile des Synthesegases, die durch die Bypassleitungen geleitet werden, wird/werden durch eine Steuereinrichtung festgelegt, die mit einer Verteilereinrichtung für die Bypassleitung und die Mehrzahl von Kühlrohren operativ verbunden ist. Die Steuereinrichtung ist eine geregelte Steuereinrichtung die den Anteil des Synthesegases, der in die Bypassleitung geleitet wird, in Abhängigkeit eines erfassten Verfahrensparameters regelt. Der Verfahrensparameter wird über einen Sensor gemessen, der mit der geregelten Steuereinrichtung operativ gekoppelt ist. Dieser Verfahrensparameter ist die Temperatur der jeweiligen gekühlten Katalysatorbetten so dass deren Temperatur durch Anpassung der Kühlleistung optimiert wird, die davon abhängt, welcher Anteil des Synthesegases durch die Kühleinheiten strömt und welcher durch die Bypassleitungen geleitet wird.

Aus der Mehrzahl von Kühlrohren und der Bypassleitung wird das Synthesegas in die ungekühlte Katalysatorbetteinheit geleitet, die ein ungekühltes Katalysatorbett in dem ersten Reaktor sein kann; alternativ ist es möglich, dass ein bestehender Reaktor, der zumindest ein erstes ungekühltes Katalysatorbett umfasst, als ungekühlte Katalysatorbetteinheit betrachtet wird. Um das teilreagierte Synthesegas nach Austritt aus der ungekühlten Katalysatorbetteinheit abzukühlen, wird es in eine Wärmetauschervorrichtung geleitet, die ein erstes der zumindest zwei gekühlten Katalysatorbetteinheiten sein kann, wobei gleichzeitig eine Weiterreaktion stattfindet. Alternativ kann die Wärmetauschervorrichtung auch ein weiterer Reaktor sein, der vorzugsweise ein gekühlter, mit Katalysator gefüllter Rohrreaktor ist, indem das teilreagierte Synthesegas abgekühlt wird und weiter reagieren gelassen wird. Denkbar ist natürlich auch eine Wärmetauschervorrichtung ohne Reaktion, wobei ein solcher Wärmetauscher in dem ersten Reaktor umfasst oder außerhalb des ersten Reaktors angeordnet sein kann.

Das abgekühlte, teilreagierte Synthesegas wird nun zu den gekühlten Katalysatorbetteinheiten geleitet, deren Anzahl bis zu vier, vorzugsweise jedoch drei Katalysatorbetteinheiten umfasst. Vorzugsweise kann zumindest das stromabwärts angeordnete letzte gekühlte Katalysatorbett einen Katalysator aufweisen, dessen Aktivität zumindest das Doppelte, vorzugsweise das Fünffache und am stärksten bevorzugt mehr als das Siebenfache der Aktivität eines herkömmlichen Eisenkatalysators beträgt. Ein solcher hochaktiver Katalysator ist beispielsweise ein Barium-aktivierter Rutheniumkatalysator. Nach der Reaktion in den zumindest zwei gekühlten Katalysatorbetteinheiten verlässt ein Produktgas, das Ammoniak in einer zweiten Austrittskonzentration enthält, den Reaktor, wird zu der Auslassvorrichtung geleitet, wo die Abtrennung des Ammoniak stattfindet.

Eine weitere Optimierung der Temperatur in den gekühlten Katalysatorbetteinheiten kann durch eine Kombination von Gleich- und Gegenstromführung des Synthesegases durch die Kühleinheiten und des teilreagierten Synthesegases in den gekühlten Katalysatorbetteinheiten, erfolgen. Insbesondere bei höheren Drücken ist es sinnvoll, im ersten gekühlten Katalysatorbett die Kühlung im Gegenstrom durchzuführen, da dort die Reaktionsgeschwindigkeit noch so hoch ist, dass es bei Kühlung im Gleichstrom nicht gelingt, die Temperatur des reagierenden Gases nahe an die optimale Temperaturkurve zu bringen. Die nachfolgenden Katalysatorbetten werden im Gleichstrom gekühlt, so dass auch hier ein optimales Temperaturprofil erreicht werden kann und die Temperatur am Ende der jeweiligen gekühlten Katalysatorbetteinheiten nicht so stark absinkt, dass die Reaktion zum Erliegen käme. Als vorteilhaft hat sich auch ergeben, dass das Synthesegas als Kühlgas zunächst durch die Mehrzahl von Kühlrohren der stromabwärts gesehenen letzten gekühlten Katalysatoreinheit geleitet wird und danach jeweils durch die nächste stromaufwärts gelegene Katalysatorbetteinheit strömt.

Mit dieser erfindungsgemäße Vorrichtung und dem Verfahren entspricht dabei die erste Ammoniakaustrittskonzentration des teilreagierten Synthesegases nach dem ersten ungekühlten Katalysatorbett einem Volumenanteil von 5 bis 25 %, wohingegen die zweite Ammoniakaustrittskonzentration des Produktgases beim Verlassen des letzten gekühlten Katalysatorbetts einen Volumenanteil von mehr als 30 %, insbesondere bis zu 40 % ergibt.

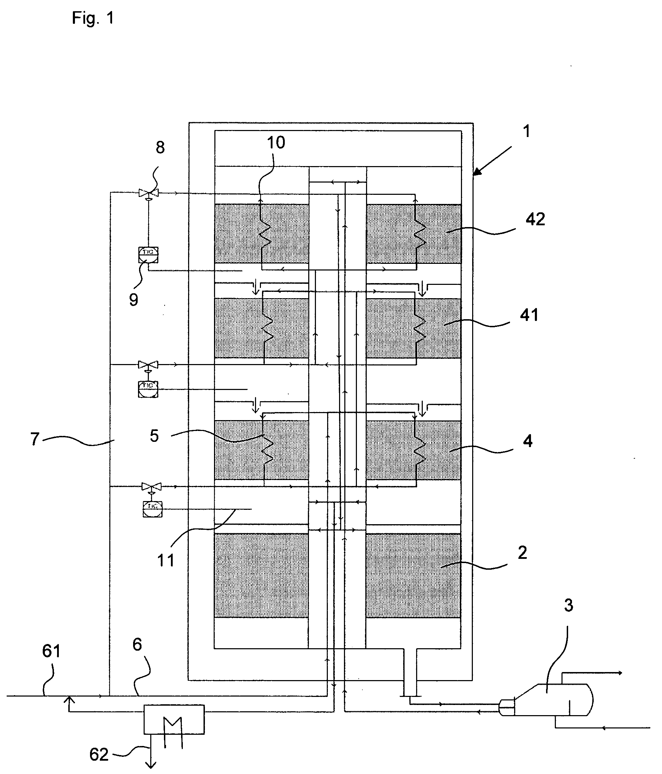

**Fig. 1** zeigt die erfindungsgemäße Vorrichtung, in der das Verfahren zur Synthese von Ammoniak aus Stickstoff und Wasserstoff durchgeführt wird. Eine Zuführvorrichtung 61 speist die Kreislaufleitung 6 mit Stickstoff und Wasserstoff enthaltendem Synthesegas. Generell kann in der Kreislaufleitung 6 nach der Zuführvorrichtung 61 und der Rückführvorrichtung von nichtreagiertem Synthesegas ein in **Fig. 1** nicht dargestellter äußerer Wärmetauscher angeordnet sein, der das Kreislaufgas einschließlich dem frischen Synthesegas vorwärmt. Dieser äußere Wärmetauscher weist für gewöhnlich eine ihm zugeordnete Bypassleitung auf (ebenfalls nicht dargestellt), die verwendet wird, um die Eintrittstemperatur des Synthesegases in den Reaktor 1 so einzustellen, dass die gewünschte Temperatur bei Eintritt in das erste ungekühlte Bett 2 erreicht werden kann.

Die Kreislaufleitung 6 tritt in den Reaktor 1 ein und führt zunächst im Gleichstrom durch die Kühlrohre 5 des letzten gekühlten Katalysatorbetts 4. Eine Austrittsvorrichtung 10 der Kühlrohre 5 kann als Austrittssammler oder als Austrittskammer ausgebildet sein, in die auch eine erste Bypassleitung 7 mündet. Der Anteil an Synthesegas, der nicht durch die Kühlrohre 5 des letzten Katalysatorbetts 4 geleitet wird, wird über die Verteilereinrichtung 8 geregelt, die mit einem Sensor 11 in Verbindung steht, der die Austrittstemperatur des Produktgases aus dem gekühlten Katalysatorbett 4 erfasst. Das nicht reagierte Synthesegas aus den Kühlrohren 5, beziehungsweise der Bypassleitung 7 wird in die Kühlrohre 5 des stromaufwärts gelegenen nächsten Katalysatorbetts 41 geleitet und im Gleichstrom geführt. In die Austrittsvorrichtung 10 der Kühlrohre 5 des zweiten Katalysatorbetts 41 mündet ebenfalls eine zweite Bypassleitung 7, wobei auch hier der Anteil des Synthesegases in Bypassleitung 7, beziehungsweise den Kühlrohren 5 temperaturgesteuert erfolgt. Von der Austrittsvorrichtung 10 für Kühlrohre 5 und Bypassleitung 7 des zweiten Katalysatorbetts 41 wird das Synthesegas zu den Kühlrohren 5 des ersten gekühlten Katalysatorbetts 42 geleitet und dort im Gegenstrom geführt. An einer Austrittsvorrichtung 10 kann auch hier der Anteil des Synthesegases aus Kühlrohren 5 des ersten gekühlten Katalysatorbetts 42 und Bypassleitung 7 in Abhängigkeit der durch den Sensor 11 erfassten Temperatur durch die Steuereinrichtung 9 geregelt werden. Von der Austrittsvorrichtung 10 der Kühlrohre 5 der ersten ungekühlten Katalysatorbetteinheit 42 wird das unreagierte Synthesegas zu dem ersten ungekühlten Katalysatorbett 2 geleitet. Dort reagieren Stickstoff und Wasserstoff zu Ammoniak bis zu einer ersten Austrittskonzentration. Das nun teilreagierte Synthesegas wird von dem ersten ungekühlten Katalysatorbett zu einer Wärmetauschervorrichtung 3 geführt, um dort unter Dampferzeugung abgekühlt zu werden. Von dem Dampferzeuger 3 aus wird das teilreagierte Synthesegas dem ersten gekühlten Katalysatorbett 42 zugeführt. Nach Austritt aus dem ersten gekühlten Katalysatorbett 42 wird die Temperatur des teilreagierten Synthesegases über den Sensor 11 erfasst und über die Steuerungseinheit 9 der Anteil an kaltem Synthesegas durch die Bypassleitung 7 geregelt, um die optimale Austrittstemperatur zu erhalten. Das teilreagierte Synthesegas durchläuft als nächstes die zweite gekühlte Katalysatorbetteinheit 41, in der nun die Kühlung durch die Kühlrohre 5 im Gleichstrom erfolgt. Auch hier wird der Anteil des als Kühlgas fungierenden Synthesegases temperaturgesteuert geregelt. Schließlich wird das teilreagierte Synthesegas durch die letzte, ebenfalls im Gleichstrom gekühlte Katalysatorbetteinheit 4 geleitet, so dass ein Produktgas mit einer zweiten Ammoniakaustrittskonzentration entsteht. Aus der letzten gekühlten Katalysatorbetteinheit 4 wird das Produktgas zur Auslassvorrichtung 62 geleitet, um Ammoniak auskondensieren zu lassen und abzutrennen.

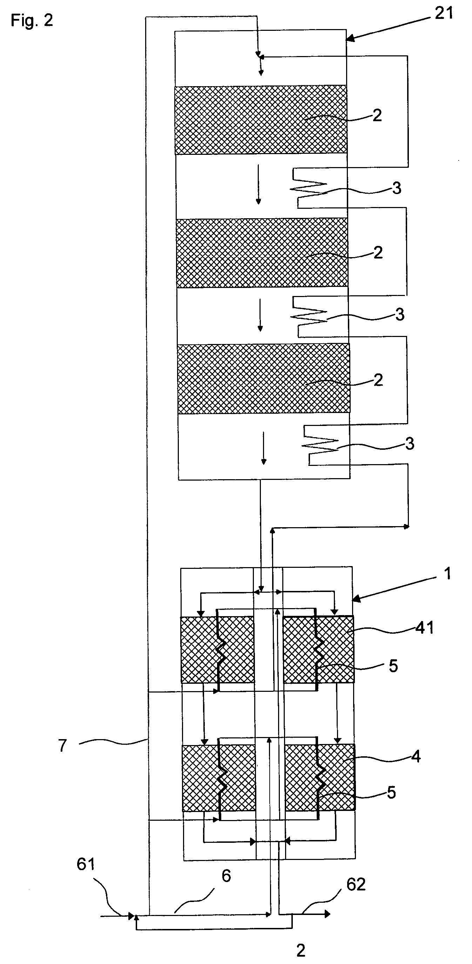

In Fig. 2 ist schematisch dargestellt, wie einem vorhandenen Reaktor 21, der nach dem Stand der Technik gebaut ist, ein Reaktor 1 mit zwei gekühlten Katalysatorbetten 4,41 nachgeschaltet ist. Der Reaktor 21 nach dem Stand der Technik enthält drei ungekühlte Katalysatorbetten 2, denen jeweils eine indirekte Kühlung 3 nachgeschaltet ist. Ausgehend von der Synthesegaszuleitung 61 führen die Bypassleitungen 7 parallel zur Kreislaufleitung 6 analog zu **Fig. 1** zu den Austrittssammlern der Mehrzahl der Kühlrohre 5 der gekühlten Katalysatorbetten 4,41. Wie in **Fig. 2** gezeigt, kann sich eine Bypassleitung 7 zum Einlass des vorhandenen Reaktors 21 erstrecken. DerAnteil des Synthesegases, der nicht durch die Bypassleitung 7 strömt, sondern den Weg der Kreislaufleitung 6 nimmt, wird zuerst durch die Kühlrohre 5 des letzten gekühlten Katalysatorbetts 4 des nachgeschalteten Reaktors 1 im Gleichstrom geleitet. Am Austrittssammler der Kühlrohre 5 vereinigt sich ein erster Synthesegasanteil aus einer ersten Bypassleitung 7 mit dem Synthesegasanteil aus der Kreislaufleitung 6. Dies wiederholt sich beim Durchlauf des Synthesegases durch die Mehrzahl von Kühlrohren 5 des ersten gekühlten Katalysatorbetts 41, in dessen Austrittssammler eine Bypassleitung 7 mündet. Das Synthesegas durchströmt die Mehrzahl der Kühlrohre 5 des ersten gekühlten Katalysatorbetts 41 ebenfalls im Gleichstrom. Von dort aus wird das Synthesegas durch die indirekten Kühlvorrichtungen 3 des bestehenden Reaktors 21 geleitet, bevor das erwärmte Synthesegas - zusammen mit dem Synthesegasanteil der dritten Bypassleitung 7, die zum Einlass des vorhandenen Reaktors 21 führt - in die drei ungekühlten Katalysatorbetten 2 geleitet wird, um dort zu der ersten Austrittskonzentration an Ammoniak zu reagieren. Das teilreagierte Synthesegas, das mit der ersten Austrittskonzentration den bestehenden Reaktor 21 verlässt, tritt in den nachgeschalteten Reaktor 1 ein und durchläuft die zwei gekühlten Katalysatorbetten 41 und 4. Das aus dem nachgeschalteten Reaktor 1 austretende Produktgas mit der zweiten Austrittskonzentration an Ammoniak wird zu einer Vorrichtung zur Auskondensierung und Abtrennung von Ammoniak geleitet (nicht dargestellt), aus der nicht reagierter Wasserstoff und Stickstoff in die Kreislaufleitung 6 zurückgeführt werden.

### BEISPIEL 1

Ein erstes berechnetes Beispiel bezieht sich auf ein Verfahren bei einem Druck von 200 bar mit einer Synthesegaseintrittsmenge von 26.153 kmol/h. Der Reaktor weist ein ungekühltes Katalysatorbett, einen äußeren Abhitzekessel und drei gekühlte Katalysatorbetten auf. Die verschiedenen Betriebsvarianten sind in der nachfolgenden **Tabelle 1** aufgeführt. Darin sind die Strömungsführung der gekühlten Katalysatorbetten, die Katalysatorart sowie das Vorhandensein von Bypässen aufgeführt. Neben dem Katalysatorvolumen ist als Ergebnis die Ammoniaktagesproduktion angegeben. Die Varianten 3 bis 5 entsprechen dabei einem Reaktoraufbau, wie er in **Fig. 1** mit drei Bypässen und der Gegenstromführung im ersten gekühlten Katalysatorbett dargestellt ist.

Aus dem Vergleich zwischen Variante 1 und 2, in der einmal das erste gekühlte Katalysatorbett im Gleichstrom und einmal im Gegenstrom geführt ist, wird ersichtlich, dass die Ammoniakproduktion für den Fall des im Gegenstrom gekühlten ersten Katalysatorbetts geringfügig zunimmt. Bei der Integration der Bypässe in den Reaktoraufbau kann die Kühlfläche vergrößert werden, so dass das Katalysatorvolumen abnimmt, wodurch jedoch auch möglich wird, einen Katalysator einzusetzen, der eine höhere Aktivität als der herkömmliche Eisenkatalysator aufweist. Mit der Bypassanordnung und einem frischen Eisenkatalysator wird eine Ammoniaktagesproduktion erreicht, die in etwa der von Variante 1 mit dem ersten gekühlten Katalysatorbett im Gleichstrom und ohne Bypässe entspricht. Altert der Eisenkatalysator, wie in Variante 4 dargestellt, sinkt die Produktion deutlich ab. Wird ein Katalysator mit deutlich höherer Aktivität eingesetzt, beispielsweise eine verbesserter Eisenkatalysator, wie in Variante 5, kann eine deutlich höhere Ammoniaktagesproduktion erzielt werden.

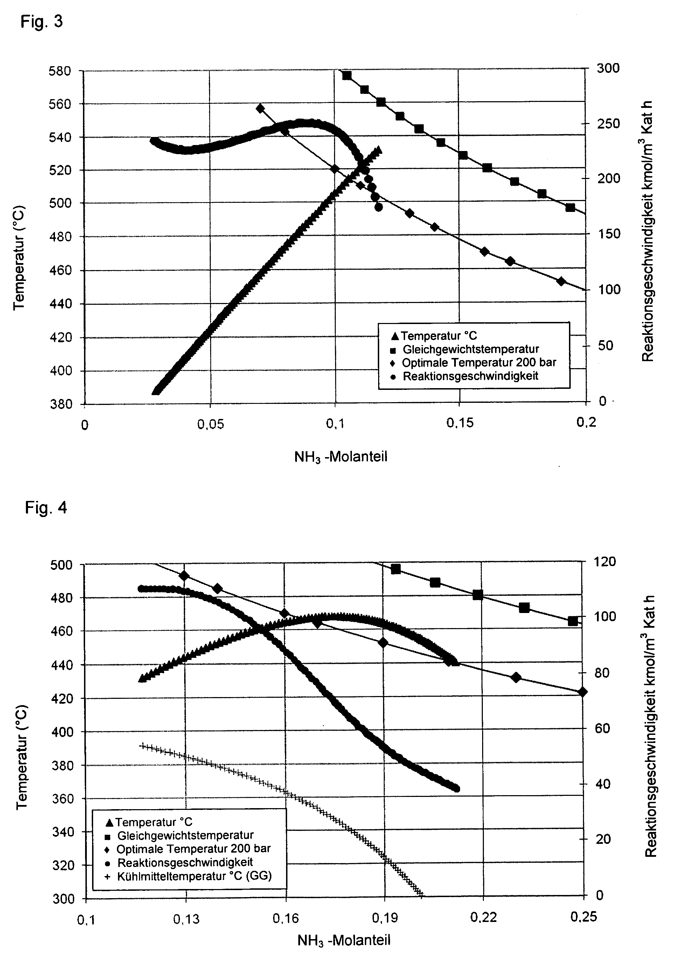

**Fig. 3** zeigt den Temperaturverlauf (▲) und die Reaktionsgeschwindigkeit (●) für das ungekühlte Katalysatorbett 2 aus **Fig.1** nach Variante 3 aus **Tabelle 1.** Ferner ist in **Fig. 3** die optimale Temperaturkurve (◆) bei 200 bar sowie die Gleichgewichtskurve (■) dargestellt. Mit zunehmender Ammoniakkonzentration sinkt zunächst die Reaktionsgeschwindigkeit, wie im linken Bereich der Kurve zu sehen ist. Nähert sich die Temperatur der optimalen Temperaturkurve, beginnt die Reaktionsgeschwindigkeit zu steigen und erreicht ein Maximum bei einem Ammoniak-Molanteil von etwa 0,09. Dieses Maximum der Reaktionsgeschwindigkeit wird erreicht, bevor die Temperaturkurve die Kurve des optimalen Temperaturverlaufs kreuzt (etwa bei einem Ammoniak-Molanteil von 0,11), da hier der Einfluss der Ammoniakkonzentration wieder überwiegt und somit die Reaktionsgeschwindigkeit wieder abnimmt, wie aus dem rechten Bereich der Kurve zu sehen ist. Bei Überschreitung der optimalen Temperaturkurve und Annäherung an die Gleichgewichtskurve sinkt die Reaktionsgeschwindigkeit steil ab.

In **Fig**. **4** ist der Temperaturverlauf (▲) und die Reaktionsgeschwindigkeit (●) für das erste gekühlte Katalysatorbett 42 nach Variante 3 aus **Tabelle 1** dargestellt. Im linken Bereich ist die Reaktionsgeschwindigkeit aufgrund der Annäherung der Temperatur (▲) an die optimale Temperaturkurve (◆) zunächst konstant, beginnt dann aber mit steigender Ammoniakkonzentration abzusinken. Überschreitet die Temperatur die optimale Temperaturkurve (vorliegend bei einem Ammoniak-Molanteil von etwa 0,17) wird der Abfall der Reaktionsgeschwindigkeit steiler. Ein weiterer Temperaturanstieg wird durch die Kühlung im Gegenstrom unterbunden - in **Fig. 4** ist zusätzlich der Verlauf der Kühlmitteltemperatur (+) dargestellt-so dass sich die Temperatur im ersten gekühlten Katalysatorbett 42 nicht weiter der Gleichgewichtskurve (■) nähert, sondern wieder bis zu der optimalen Temperaturkurve absinkt.

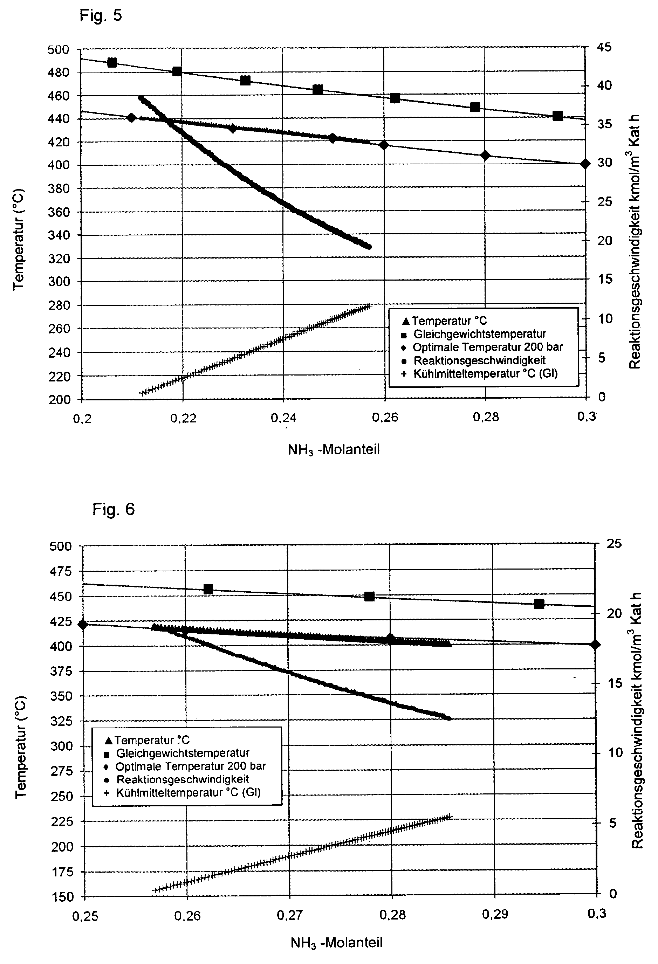

**Fig. 5 und 6** zeigen den Temperaturverlauf (▲) und die Reaktionsgeschwindigkeit (●) für das zweite gekühlte Katalysatorbett 41 und das letzte gekühlte Katalysatorbett 4 nach Variante 3 aus **Tabelle 1.** Durch die erfindungsgemäße Vorrichtung bzw. Verfahrensführung wird hier nun der vorteilhafte Verlauf der Temperatur praktisch entlang der optimalen Temperaturkurve (◆) erreicht, so dass keine Annäherung der Temperatur an die Gleichgewichtskurve (■) stattfindet und der Abfall der Reaktionsgeschwindigkeit ausschließlich in der zunehmenden Ammoniakkonzentration begründet liegt. Ferner ist in **Fig. 5** und **Fig. 6** die Kühlmitteltemperatur (+) des im Gleichstrom gekühlten zweiten Katalysatorbetts 41 und letzten Katalysatorbetts 4 dargestellt.

**Tabelle 2** gibt den Temperaturverlauf sowie Menge und Zusammensetzung des Synthesegases in einem Reaktor nach Variante 3 wieder. Mit dieser Reaktorvariante, bestehend aus einem ungekühlten Katalysatorbett, einem äußeren Abhitzekessel und drei gekühlten Katalysatorbetten mit Eisenkatalysator, von denen das erste gekühlte Katalysatorbett im Gegenstrom betrieben wird, und das drei Bypässe aufweist, wird eine Ammoniakaustrittskonzentration von 28, 6 Vol.-% erreicht.

### BEISPIEL 2

Das zweite berechnete Beispiel bezieht sich auf einen Reaktor mit einem ungekühlten Katalysatorbett, einem äußeren Abhitzekessel und drei gekühlten Katalysatorbetten. In den ersten zwei gekühlten Katalysatorbetten wird ein herkömmlicher Eisenkatalysator verwendet, im letzten gekühlten Katalysatorbett der hochaktive Rutheniumkatalysator. Die drei gekühlten Betten werden im Gleichstrom betrieben. Die Katalysatorvolumina liegen bei 218 m³ Eisenkatalysator und 70 m³ Rutheniumkatalysator. Dies ergibt bei einer Synthesegasmenge von 24.533 kmol/h ein Tagesammoniakproduktion von 2.000 Tonnen. Dieses Beispiel wird bei einem Druck von ca. 100 bar durchgeführt. Unter Verwendung des Rutheniumkatalysators kann eine Ammoniakaustrittskonzentration von 30,5 Vol.-% erreicht werden (vgl. **Tabelle 3**).

### BEISPIEL 3

Berechnungsbeispiel 3 bezieht sich auf eine Reaktoranordnung wie in **Fig. 2** dargestellt. Die Anordnung besteht aus einem Reaktor mit drei ungekühlten Betten sowie drei internen indirekten Wärmetauschern und einem zweiten Reaktor mit zwei.gekühlten Katalysatorbetten. Das Katalysatorvolumen des Eisenkatalysators beträgt 46 m³. Bei einer Eintrittsgasmenge von 10.804 kmol/h wird eine Ammoniakproduktion von 859 Tagestonnen erzielt. Die erste Austrittskonzentration aus dem herkömmlichen Reaktor liegt bei 21,6 Vol.-%, wobei durch Nachschaltung des zweiten Katalysators mit den zwei gekühlten Katalysatorbetten eine Austrittkonzentration im Produktgas auf 27,4 Vol.-% Ammoniak erhöht wird. Weiterhin werden aus Tabelle 4 der Temperaturverlauf sowie der Druckbereich ersichtlich.

**Tabelle 1**

| **Variante** | ungekühltes Kat.-Bett | gekühlte Gleichstrom | Kat.-Betten Gegenstrom | Fe frisch | Katalysator Fe alt | höhere Akt. | Bypässe | Kat. Vol. m³ | NH₃ Prod. tato |
|---|---|---|---|---|---|---|---|---|---|
| 1 | 1 | 3 | 0 | ja | | | | 96,3 | 2142 |
| 2 | 1 | 2 | 1 | ja | | | | 96,9 | 2148 |
| 3 | 1 | 2 | 1 | ja | | | 3 | 95,8 | 2141 |
| 4 | 1 | 2 | 1 | | ja | | 3 | 95,8 | 1887 |
| 5 | 1 | 2 | 1 | | | ja | 3 | 95,8 | 2449 |

**Tabelle 2**

| | gek. Bett 3 kalt ein | gek. Bett 2 kalt ein | gek. Bett 1 kalt ein | Bett1 ein | Bett1 aus | Abhitzekessel aus | gek. Bett 1 warm aus | gek. Bett 2 warm aus | gek. Bett 3 warm aus |
|---|---|---|---|---|---|---|---|---|---|
| Temperatur (°C) | 157,0 | 205,4 | 274,5 | 388,0 | 532,0 | 432,0 | 441,0 | 420,0 | 404,0 |
| Druck (bar) | 199,0 | 198,5 | 198,0 | 197,5 | 197,2 | 196,4 | 194,7 | 193,5 | 192,4 |
| Menge (kmol/h) | 26153 | 26153 | 26153 | 26153 | 24066 | 24066 | 22185 | 21392 | 20915 |
| Zusammensetzung | | | | | | | | | |
| N₂ (Vol%) | 24,3 | 24,3 | 24,3 | 24,3 | 22,0 | 22,0 | 19,7 | 18,5 | 17,8 |
| H₂ (Vol %) | 72,8 | 72,8 | 72,8 | 72,8 | 66,1 | 66,1 | 59,0 | 55,6 | 53,4 |
| NH₃ (Vol %) | 2,8 | 2,8 | 2,8 | 2,8 | 11,7 | 11,7 | 21,2 | 25,7 | 28,6 |
| CH₄ Vol %) | 0,0 | 0,0 | 0,0 | 0,0 | 0,0 | 0,0 | 0,0 | 0,0 | 0,0 |
| Ar (Vol %) | 0,2 | 0,2 | 0,2 | 0,2 | 0,2 | 0,2 | 0,2 | 0,2 | 0,2 |

**Tabelle 3**

| | gek. Bett 3 kalt ein | gek. Bett 2 kalt ein | gek. Bett 1 kalt ein | Bett1 ein | Bett1 aus | Abhitzekessel aus | gek. Bett 1 warm aus | gek. Bett 2 warm aus | gek. Bett 3 warm aus |
|---|---|---|---|---|---|---|---|---|---|
| Temperatur (°C) | 97 | 218 | 261,1 | 360 | 479 | 432 | 403 | 384 | 355 |
| Druck (bar) | 99,5 | 99 | 98,5 | 98 | 97,9 | 97,1 | 96,8 | 96,6 | 96,4 |
| Menge (kmol/h) | 24533 | 24533 | 24533 | 24533 | 22872 | 22872 | 21721 | 21140 | 19640 |
| Zusammensetzung | | | | | | | | | |
| N₂ (Vol %) | 23,8 | 23,8 | 23,8 | 23,8 | 21,9 | 21,9 | 20,4 | 19,6 | 17,3 |
| H₂ (Vol %) | 71,5 | 71,5 | 71,5 | 71,5 | 65,8 | 65,8 | 61,3 | 58,9 | 51,9 |
| NH₃ (Vol %) | 4,5 | 4,5 | 4,5 | 4,5 | 12,1 | 12,1 | 18,0 | 21,3 | 30,5 |
| CH₄ Vol %) | 0,0 | 0,0 | 0,0 | 0,0 | 0,0 | 0,0 | 0,0 | 0,0 | 0,0 |
| Ar (Vol %) | 0,2 | 0,2 | 0,2 | 0,2 | 0,2 | 0,2 | 0,2 | 0,2 | 0,2 |

**Tabelle 4**

| | Int WT3 kalt ein | Int WT3 kalt aus | Int WT2 kalt aus | Int WT1 kalt aus | Bett1 aus | Int WT1 warm aus | Bett 2 aus | Int WT2 warm aus | Bett3 aus | Int WT3 warm aus | gek. Bett 1 aus | gek. Bett 2 aus |
|---|---|---|---|---|---|---|---|---|---|---|---|---|
| Temperatur (°C) | 428 | 179 | 250 | 378 | 535 | 407 | 481 | 408 | 450 | 428 | 407 | 399 |
| Druck (bar) | 230,5 | 230,0 | 229,5 | 229,5 | 228,6 | 228,1 | 227,6 | 227,1 | 226,6 | 226,1 | 225,0 | 224,1 |
| Menge (kmol/h) | 10804 | 10804 | 10804 | 10804 | 9823 | 9823 | 9366 | 9366 | 9114 | 9114 | 8859 | 8701 |
| Zusammensetzung | | | | | | | | | | | | |
| N₂ (Vol %) | 22,3 | 22,3 | 22,3 | 22,3 | 19,6 | 19,7 | 18,1 | 18,1 | 17,2 | 17,2 | 16,3 | 15,7 |
| H₂ (Vol %) | 67,0 | 67,0 | 67,0 | 67,0 | 58,7 | 59,1 | 54,3 | 54,3 | 51,6 | 51,6 | 48,8 | 47,0 |
| NH₃ (Vol %) | 2,6 | 2,6 | 2,6 | 2,6 | 12,9 | 12,9 | 18,4 | 18,4 | 21,6 | 21,6 | 25,1 | 27,4 |
| CH₄ Vol %) | 5,5 | 5,5 | 5,5 | 5,5 | 6,0 | 6,0 | 6,3 | 6,3 | 6,5 | 6,5 | 6,7 | 6,8 |
| Ar (Vol %) | 2,6 | 2,6 | 2,6 | 2,6 | 2,8 | 2,8 | 3,0 | 3,0 | 3,0 | 3,0 | 3,1 | 3,2 |

## Patentansprüche

1. Vorrichtung zur Synthese von Ammoniak aus einem N₂ und H₂ enthaltenden Synthesegas mit zumindest einem ersten Reaktor (1), wobei die Vorrichtung umfasst:
- eine erste ungekühlte Katalysatorbetteinheit (2),
- zumindest eine Wärmetauschervorrichtung (3),
- zumindest zwei gekühlte Katalysatorbetteinheiten (4,41,42), wobei jede gekühlte Katalysatorbetteinheit (4,41,42) mit einer Mehrzahl von Kühlrohren (5) ausgestattet ist, und
- eine Kreislaufleitung (6) mit zumindest einer Zuführvorrichtung (61) und zumindest einer Auslassvorrichtung (62), wobei die Kreislaufleitung (6) ausgehend von der Zuführvorrichtung (61) nacheinander stromabwärts angeordnet die Mehrzahl von Kühlrohren (5), die erste ungekühlte Katalysatorbetteinheit (2), die zumindest eine Wärmetauschervorrichtung (3,31) und die zumindest zwei gekühlten Katalysatorbetteinheiten (4,41,42) bis zu der Auslassvorrichtung (62) aufweist, wobei die Mehrzahl von Kühlrohren (5) von jeder gekühlten Katalysatorbetteinheit (4,41,42) an einem Auslassende der Kühlrohre jeweils mit einer Austrittssammelvorrichtung (10) verbunden ist,
und wobei die Kreislaufleitung (6) zumindest je eine Bypassleitung (7) für jede gekühlte Katalysatorbetteinheit (4,41,42) aufweist, die jeweils zwischen der Zuführvorrichtung (61) und der Austrittssammelvorrichtung (10) der Mehrzahl von Kühlrohren (5) von jeder gekühlten Katalysatorbetteinheit (4,41,42) angeordnet ist,
wobei die Kreislaufleitung (6) zumindest eine Steuereinrichtung aufweist, die mit zumindest einer Verteilereinrichtung (8) für die zumindest eine Bypassleitung (7) und die Mehrzahl von Kühlrohren (5) operativ verbunden ist, wobei die Steuereinrichtung eine Regeleinrichtung (9) ist und mit einem Sensor (11) zur Erfassung eines Parameters, der eine Austrittstemperatur der gekühlten Katalysatorbetteinheiten (4,41,42) ist, operativ zur Regelung der Verteilereinrichtung (8) gekoppelt ist,
wobei die Kühlleistung der gekühlten Katalysatorbetteinheit (4,41,42) über eine Bypassregelung variierbar und das Temperaturprofil jeder gekühlten Katalysatorbetteinheit (4,41,42) auf das optimale Temperaturprofil zur Ammoniaksynthese einstellbar ist.

2. Vorrichtung nach Anspruch 1, wobei ein Fluidpfad für das Synthesegas durch die Kreislaufleitung (6) bereitgestellt ist, der ausgehend von der Zuführvorrichtung (61) nacheinander zuerst durch die Mehrzahl von Kühlrohren (5) der stromabwärts gelegenen letzten gekühlten Katalysatorbetteinheit (4), danach durch die Mehrzahl von Kühlrohren (5) der jeweils nächsten stromaufwärts gelegenen Katalysatorbetteinheit (41,42) führt.

3. Vorrichtung nach Anspruch 1 oder 2, wobei die erste ungekühlte Katalysatorbetteinheit (2)
- ein in dem ersten Reaktor (1) angeordnetes, erstes ungekühltes Katalysatorbett (2) oder
- ein zweiter Reaktor (21) ist, der zumindest ein erstes ungekühltes Katalysatorbett (2) umfasst.

4. Vorrichtung nach zumindest einem der Ansprüche 1 bis 3, wobei die zumindest eine Wärmetauschervorrichtung (3)
- zumindest eine erste der zumindest zwei gekühlten Katalysatorbetteinheiten (4,41,42),
- ein zweiter Reaktor ist für den Fall, dass die erste ungekühlte Katalysatorbetteinheit (2) ein in dem ersten Reaktor (1) angeordnetes, erstes ungekühltes Katalysatorbett (2) ist, oder ein dritter Reaktor ist für den Fall, dass die erste ungekühlte Katalysatorbetteinheit (2) ein zweiter Reaktor ist, der zumindest ein erstes ungekühltes Katalysatorbett (2) umfasst, wobei der zweite oder dritte Reaktor vorzugsweise ein gekühlter, mit Katalysator gefüllter Rohrreaktor ist, oder
- ein Wärmetauscher (3) ist, der in dem ersten Reaktor (1) umfasst ist oder der außerhalb des ersten Reaktors (1) angeordnet ist.

5. Vorrichtung nach zumindest einem der Ansprüche 1 bis 4, wobei zumindest eine stromabwärts letzte gekühlte Katalysatorbetteinheit (4) der zumindest zwei gekühlten Katalysatorbetteinheiten (4,41,42) einen Katalysator mit einer Aktivität umfasst, die zumindest das doppelte, vorzugsweise mehr als das Fünffache und am stärksten bevorzugt mehr als das Siebenfache der Aktivität eines herkömmlichen Eisenkatalysators beträgt.

6. Vorrichtung nach zumindest einem der Ansprüche 1 bis 5, wobei eine Anzahl der gekühlten Katalysatorbetteinheiten (4,41,42) bis zu vier, vorzugsweise drei Katalysatorbetteinheiten umfasst.

7. Verfahren zur Synthese von Ammoniak aus einem N₂ und H₂ enthaltenden Synthesegas in einer Vorrichtung mit zumindest einem ersten Reaktor nach zumindest einem der Ansprüche 1 bis 6, umfassend die Schritte
- Zuführen von N₂ und H₂ enthaltenden Synthesegas durch die Zuführvorrichtung (61) in die Kreislaufleitung (6),
- Leiten des Synthesegases durch die Mehrzahl von Kühlrohren (5),
- Einleiten und reagieren Lassen des Synthesegases in der ersten ungekühlten Katalysatorbetteinheit (2) unter Bildung eines teilreagierten Synthesegases, das Ammoniak in einer ersten Austrittskonzentration enthält,
- Leiten und Abkühlen des teilreagierten Synthesegases in der zumindest einen Wärmetauschervorrichtung (3),
- Leiten und reagieren Lassen des teilreagierten Synthesegases in den zumindest zwei gekühlten Katalysatorbetteinheiten (4,41,42) unter Bildung eines Produktgases, das Ammoniak in einer zweiten Austrittskonzentration enthält,
- Ausleiten des Produktgases an der Auslassvorrichtung (62), um Ammoniak abzutrennen,
- Zurückführen von unreagiertem N₂ und H₂ aus dem Produktgas vor der Zuführvorrichtung (61) und zur Verfügung stellen des unreagierten N₂ und H₂ aus dem Produktgas und nicht rezykliertem frischen N₂ und H₂ als Synthesegas in der Kreislaufleitung (6), unter gleichzeitigem
- Regeln des Temperaturverlaufs in den gekühlten Katalysatorbetteinheiten (4,41,42) durch
- Leiten jeweils eines Anteils des Synthesegases durch die jeder gekühlten Katalysatorbetteinheiten (4,41,42) zugeordneten, jeweils in die Austrittssammelvorrichtung (10) mündenden Bypassleitungen (7) parallel zu einem Restanteil des Synthesegases durch die Mehrzahl der Kühlrohre (5) der gekühlten Katalysatorbetteinheiten (4,41,42), wobei zumindest eine Steuereinrichtung, die als Regeleinrichtung (9) ausgebildet ist, über einen operativ gekoppelten Sensor (11) zumindest jeweils eine Austrittstemperatur der zumindest zwei gekühlten Katalysatorbetteinheiten (4,41,42) erfasst und durch Ansteuern der zumindest einen Verteilereinrichtung (8) den Anteil/die Anteile des Synthesegases regelt, der/die in die Bypassleitungen (7) geleitet wird/werden.

8. Verfahren nach Anspruch 7, wobei das Verfahren bei Drücken in einem Bereich zwischen 30 und 300 bar und bei Temperaturen in einem Bereich zwischen 100 und 600 °C durchgeführt wird.

9. Verfahren nach Anspruch 7 oder 8, wobei eine Temperatur des Synthesegases vor dem Einleiten in die erste ungekühlte Katalysatorbetteinheit (2) zwischen 150 und 500 °C liegt.

10. Verfahren nach zumindest einem der Ansprüche 7 bis 9, wobei das Leiten des Synthesegases durch die Mehrzahl von Kühlrohren (5) und das Leiten und reagieren Lassen des teilreagierten Synthesegases in den zumindest zwei gekühlten Katalysatorbetteinheiten (4,41,42)
- im Gleichstrom,
- im Gegenstrom, oder
- in einer Kombination von Gleich- und Gegenstrom, insbesondere in der Mehrzahl von Kühlrohren (5) der ersten gekühlten Katalysatorbetteinheit (42) im Gegenstrom und in der Mehrzahl von Kühlrohren (5) der übrigen Katalysatorbetteinheiten (4,41) im Gleichstrom erfolgt.

11. Verfahren nach zumindest einem der Ansprüche 7 bis 10, wobei das Leiten des Synthesegases durch die Mehrzahl von Kühlrohren (5) der zumindest zwei gekühlten Katalysatorbetteinheiten (4,41,42) umfasst:
- Leiten des Synthesegases zuerst durch die Mehrzahl von Kühlrohren (5) der stromabwärts gelegenen letzten gekühlten Katalysatorbetteinheit (4), danach
- Leiten des Synthesegases durch die Mehrzahl von Kühlrohren (5) der jeweils nächsten stromaufwärts gelegenen Katalysatorbetteinheit (41,42).

12. Verfahren nach zumindest einem der Ansprüche 7 bis 11, wobei das Leiten und Abkühlen des teilreagierten Synthesegases Hochdruckdampf mit einem Druck von 50 bis 140 bar erzeugt.

13. Verfahren nach zumindest einem der Ansprüche 7 bis 12, wobei das reagieren Lassen des teilreagierten Synthesegases zumindest in der stromabwärts gelegenen letzten gekühlten Katalysatorbetteinheit (4) an einem Katalysator mit einer Aktivität erfolgt, die zumindest das doppelte, vorzugsweise mehr als das Fünffache und am stärksten bevorzugt mehr als das Siebenfache der Aktivität eines herkömmlichen Eisenkatalysators beträgt.

14. Verfahren nach zumindest einem der Ansprüche 7 bis 13, wobei die erste Ammoniak-Austrittskonzentration des teilreagierten Synthesegases einem Volumenanteil von 5 bis 25 % entspricht, und wobei die zweite Ammoniak-Austrittskonzentration des Produktgases einen Volumenanteil von mehr als 30 %, insbesondere bis zu 40 % ergibt.

## Claims

1. Device for the synthesis of ammonia from an N₂- and H₂-containing synthesis gas with at least one first reactor (1), whereby the device comprises:
- a first non-cooled catalyst bed unit (2);
- at least one heat exchanger device (3);
- at least two cooled catalyst bed units (4, 41, 42), whereby each cooled catalyst bed unit (4, 41, 42) is fitted with a plurality of cooling pipes (5); and
- a re-circulating line (6) with at least one feed device (61) and at least one outlet device (62), whereby the re-circulating line (6) comprises, starting from the feed device (61), one after the other in downstream arrangement the plurality of cooling pipes (5) the first non-cooled catalyst bed unit (2), the at least one heat exchanger device (3, 31), and the at least two cooled catalyst bed units (4, 41, 42) up to the outlet device (62), whereby the plurality of cooling pipes (5) of each cooled catalyst bed unit (4, 41, 42) is connected, on one outlet end of the cooling pipes each, to an exit collecting device (10),
and whereby the re-circulating line (6) comprises at least one bypass line (7) for each cooled catalyst bed unit (4, 41, 42), each of which being arranged between the feed device (61) and the exit collecting device (10) of the plurality of cooling pipes (5) of each cooled catalyst bed unit (4, 41, 42),
whereby the re-circulating line (6) comprises at least one control facility that is operatively connected to at least one distributor facility (8) for the at least one bypass line (7) and the plurality of cooling pipes (5), whereby the control facility is a regulating facility (9) and is operatively coupled to a sensor (11) for detection of a parameter that is an exit temperature of the cooled catalyst bed units (4, 41, 42) for regulation of the distributor facility (8), whereby the cooling power of the cooled catalyst bed units (4, 41, 42) can be varied via a bypass control and the temperature profile of each cooled catalyst bed unit (4, 41, 42) can be adjusted to the optimal temperature profile for ammonia synthesis.

2. Device according to claim 1, whereby a fluid path for the synthesis gas through the re-circulating line (6) is being provided, which extends, starting
from the feed device (61) in sequence first through the plurality of cooling pipes (5) of the downstream last cooled catalyst bed unit (4), then through the plurality of cooling pipes (5) of the respective next upstream catalyst bed unit (41,42).

3. Device according to claim 1 or is 2, whereby the first non-cooled catalyst bed unit (2) is
- a first non-cooled catalyst bed (2) that is arranged in the first reactor (1) or
- a second reactor (21) that comprises at least a first non-cooled catalyst bed (2).

4. Device according to at least one of the claims 1 to 3, whereby the at least one heat exchanger device (3)
- is at least a first of the at least two cooled catalyst bed units (4, 41, 42),
- is a second reactor, in case the first non-cooled catalyst bed unit (2) is a first non-cooled catalyst bed (2) that is arranged in the first reactor (1), or is a third reactor, in case the first non-cooled catalyst bed unit (2) is a second reactor that comprises at least one first non-cooled catalyst bed (2), whereby the second or third reactor preferably is a cooled tube reactor filled with catalyst, or
- is a heat exchanger (3) that is comprised in the first reactor (1) or is arranged outside of the first reactor (1).

5. Device according to at least one of the claims 1 to 4, whereby at least one, in downstream direction last, cooled catalyst bed unit (4) of the at least two cooled catalyst bed units (4, 41, 42) comprises a catalyst with an activity that is at least twice as high, preferably more than five times as high and most preferably more than seven times as high as the activity of a conventional iron catalyst.

6. Device according to at least one of the claims 1 to 5, whereby a number of cooled catalyst bed units (4, 41, 42) comprises up to four, preferably three, catalyst bed units.

7. Method for the synthesis of ammonia from an N₂- and H₂-containing synthesis gas in a device with at least one first reactor according to at least one of the claims 1 to 6, comprising the steps of
- feeding N₂- and H₂-containing synthesis gas through the feed device (61) into the re-circulating line (6);
- feeding the synthesis gas through the plurality of cooling pipes (5);
- introducing and reacting the synthesis gas in the first non-cooled catalyst bed unit (2) while forming a partially reacted synthesis gas that contains ammonia at a first exit concentration;
- feeding and cooling the partially reacted synthesis gas in the at least one heat exchanger device (3);
- feeding and reacting the partially reacted synthesis gas in the at least two cooled catalyst bed units (4, 41, 42) while forming a product gas that contains ammonia at a second exit concentration;
- guiding the product gas out at the outlet device (62) in order to separate ammonia;
- returning unreacted N₂ and H₂ from the product gas upstream of the feed device (61) and providing the unreacted N₂ and H₂ from the product gas and non-recycled fresh N₂ and H₂ as synthesis gas in the re-circulating line (6) while simultaneously
- regulating the temperature profile in the cooled catalyst bed units (4, 41, 42) by
- feeding a portion of the synthesis gas through each of the bypass lines (7) that are assigned to each cooled catalyst bed unit (4, 41, 42) and each merge into the exit collecting device (10), parallel to a residual portion of the synthesis gas through the plurality of the cooling pipes (5) of the cooled catalyst bed units (4, 41, 42), whereby at least one control facility that is designed as regulating facility (9) detects, by means of an operatively coupled sensor (11), at least one exit temperature each of the at least two cooled catalyst bed units (4, 41, 42) and regulates, by triggering the at least one distributor facility (8), the fraction/fractions of the synthesis gas that is/are fed into the bypass lines (7).

8. Method according to claim 7, whereby the method is implemented at pressures in the range of 30 to 300 bar and at temperatures in the range of 100 to 600°C.

9. Method according to claim 7 or 8, whereby a temperature of the synthesis gas before feeding it into the first non-cooled catalyst bed unit (2) is between 150 and 500°C.

10. Method according to at least one of the claims 7 to 9, whereby the feeding of the synthesis gas through the plurality of cooling pipes (5) and the feeding and reacting of the partially reacted synthesis gas in the at least two cooled catalyst bed units (4, 41, 42) takes place
- in co-current operation,
- in counter-current operation or
- in a combination of co-current and counter-current operation, in particular takes place in counter-current operation in the plurality of cooling pipes (5) of the first cooled catalyst bed unit (42) and takes place in co-current operation in the plurality of cooling pipes (5) of the remaining catalyst bed units (4, 41).

11. Method according to at least one of the claims 7 to 10, whereby the feeding of the synthesis gas through the plurality of cooling pipes (5) of the at least two cooled catalyst bed units (4, 41, 42) comprises:
- feeding the synthesis gas first through the plurality of cooling pipes (5) of the downstream last cooled catalyst bed unit (4), followed by
- feeding the synthesis gas through the plurality of cooling pipes (5) of the respective next upstream catalyst bed unit (41, 42).

12. Method according to at least one of the claims 7 to 11, whereby the feeding and cooling of the partially reacted synthesis gas generates high-pressure steam at a pressure of 50 to 140 bar.

13. Method according to at least one of the claims 7 to 12, whereby the reacting of the partially reacted synthesis gas takes place at least in the downstream last cooled catalyst bed unit (4) on a catalyst with an activity that is at least twice as high, preferably more than five times as high and most preferably more than seven times as high as the activity of a conventional iron catalyst.

14. Method according to at least one of the claims 7 to 13, whereby the first ammonia exit concentration of the partially reacted synthesis gas corresponds to a volume portion of 5 to 25% and whereby the second ammonia exit concentration of the product gas results in a volume portion of more than 30%, in particular up to 40%.

## Revendications

1. Dispositif de synthèse d'ammoniac à partir d'un gaz de synthèse contenant N₂ et H₂ avec au moins un premier réacteur (1), dans lequel le dispositif comprend:
- un premier module de lit catalytique non refroidi (2),
- au moins un dispositif échangeur de chaleur (3),
- au moins deux modules de lit catalytique refroidis (4, 41, 42), dans lequel chaque module de lit catalytique refroidi (4, 41, 42) est équipé d'une pluralité de tuyaux de refroidissement (5), et
- une conduite de recyclage (6) avec au moins un dispositif d'amenée (61) et au moins un dispositif de sortie (62), dans lequel la conduite de recyclage (6) présente, en partant du dispositif d'amenée (61) disposés en aval les uns à la suite des autres, la pluralité de tuyaux de refroidissement (5), le premier module de lit catalytique non refroidi (2), l'au moins un dispositif échangeur de chaleur (3, 31) et les au moins deux modules de lit catalytique refroidis (4, 41, 42) jusqu'au dispositif de sortie (62), dans lequel la pluralité de tuyaux de refroidissement (5) de chaque module de lit catalytique refroidi (4, 41, 42) est reliée à une extrémité de sortie des tuyaux de refroidissement à chaque fois à un dispositif collecteur de sortie (10), et dans lequel la conduite de recyclage (6) présente au moins à chaque fois une conduite de dérivation (7) pour chaque module de lit catalytique refroidi (4, 41, 42) qui est disposée à chaque fois entre le dispositif d'amenée (61) et le dispositif collecteur de sortie (10) de la pluralité de tuyaux de refroidissement (5) de chaque module de lit catalytique refroidi (4, 41, 42),
dans lequel la conduite de recyclage (6) présente au moins un dispositif de commande qui est relié de manière opérationnelle à au moins un dispositif distributeur (8) pour l'au moins une conduite de dérivation (7) et la pluralité de tuyaux de refroidissement (5), dans lequel le dispositif de commande est un dispositif de régulation (9) et est accouplé de manière opérationnelle à un capteur (11) pour la détection d'un paramètre, qui est une température de sortie des modules de lit catalytique refroidis (4, 41, 42), en vue de la régulation du dispositif distributeur (8),
dans lequel la puissance de refroidissement du module de lit catalytique refroidi (4, 41, 42) est variable par le biais d'une régulation de dérivation et le profil de température de chaque module de lit catalytique refroidi (4, 41, 42) est réglable sur le profil de température optimal en vue de la synthèse d'ammoniac.

2. Dispositif selon la revendication 1, dans lequel un chemin de fluide est mis à disposition pour le gaz de synthèse à travers la conduite de recyclage (6), lequel conduit, en partant du dispositif d'amenée (61) les uns à la suite des autres, d'abord à travers la pluralité de tuyaux de refroidissement (5) du dernier module de lit catalytique refroidi (4) situé en aval, ensuite à travers la pluralité de tuyaux de refroidissement (5) du module de lit catalytique suivant à chaque fois (41, 42) situé en amont.

3. Dispositif selon la revendication 1 ou 2, dans lequel le premier module de lit catalytique non refroidi (2) est
- un premier lit catalytique non refroidi (2) disposé dans le premier réacteur (1) ou
- un deuxième réacteur (21) qui comprend au moins un premier lit catalytique non refroidi (2).

4. Dispositif selon au moins une des revendications 1 à 3, dans lequel l'au moins un dispositif échangeur de chaleur (3) est
- au moins un premier des au moins deux modules de lit catalytique refroidis (4, 41, 42),
- un deuxième réacteur au cas où le premier module de lit catalytique non refroidi (2) est un premier lit catalytique non refroidi (2) disposé dans le premier réacteur (1), ou est un troisième réacteur au cas où le premier module de lit catalytique non refroidi (2) est un deuxième réacteur qui comprend au moins un premier lit catalytique non refroidi (2), dans lequel le deuxième ou troisième réacteur est de préférence un réacteur tubulaire refroidi, rempli de catalyseur, ou
- est un échangeur de chaleur (3) qui est compris dans le premier réacteur (1) ou qui est disposé en dehors du premier réacteur (1).

5. Dispositif selon au moins une des revendications 1 à 4, dans lequel au moins un dernier module de lit catalytique refroidi en aval (4) des au moins deux modules de lit catalytique refroidis (4, 41, 42) comprend un catalyseur avec une activité qui se monte au moins au double, de préférence à plus du quintuple et de manière préférée entre toutes à plus du septuple de l'activité d'un catalyseur ferreux usuel.

6. Dispositif selon au moins une des revendications 1 à 5, dans lequel un certain nombre de modules de lit catalytique refroidis (4, 41, 42) comprend jusqu'à quatre, de préférence trois modules de lit catalytique.

7. Procédé de synthèse d'ammoniac à partir d'un gaz de synthèse contenant N₂ et H₂ dans un dispositif avec au moins un premier réacteur selon au moins une des revendications 1 à 6, comprenant les étapes
- amenée de gaz de synthèse contenant N₂ et H₂ à travers le dispositif d'amenée (61) dans la conduite de recyclage (6),
- conduite du gaz de synthèse à travers la pluralité de tuyaux de refroidissement (5),
- introduction et action laissant réagir le gaz de synthèse dans le premier module de lit catalytique non refroidi (2) en formant un gaz de synthèse ayant partiellement réagi qui contient de l'ammoniac dans une première concentration de sortie,
- conduite et refroidissement du gaz de synthèse ayant partiellement réagi dans l'au moins un dispositif échangeur de chaleur (3),
- conduite et action laissant réagir le gaz de synthèse ayant partiellement réagi dans les au moins deux modules de lit catalytique refroidis (4, 41, 42) en formant un gaz de produit qui contient de l'ammoniac dans une seconde concentration de sortie,
- diversion du gaz de produit vers le dispositif de sortie (62) pour séparer l'ammoniac,
- renvoi du N₂ et H₂ n'ayant pas réagi provenant du gaz de produit avant le dispositif d'amenée (61) et mise à disposition du N₂ et H₂ n'ayant pas réagi provenant du gaz de produit et du N₂ et H₂ frais non recyclé comme gaz de synthèse dans la conduite de recyclage (6) en régulant simultanément la courbe de température dans les modules de lit catalytique refroidis (4, 41, 42) par
- conduite à chaque fois d'une portion du gaz de synthèse à travers les conduites de dérivation (7) associées à chaque module de lit catalytique refroidi (4, 41, 42), débouchant à chaque fois dans le dispositif collecteur de sortie (10) parallèlement à une portion restante du gaz de synthèse à travers la pluralité de tuyaux de refroidissement (5) des modules de lit catalytique refroidis (4, 41, 42), dans lequel au moins un dispositif de commande qui est réalisé comme dispositif de régulation (9) détecte par le biais d'un capteur (11) accouplé de manière opérationnelle au moins à chaque fois une température de sortie des au moins deux modules de lit catalytique refroidis (4, 41, 42) et régule par commande de l'au moins un dispositif distributeur (8) la portion/les portions du gaz de synthèse qui est/sont conduite(s) dans les conduites de dérivation (7).

8. Procédé selon la revendication 7, dans lequel le procédé est réalisé à des pressions dans une région comprise entre 30 et 300 bar et à des températures dans une région comprise entre 100 et 600°C.

9. Procédé selon la revendication 7 ou 8, dans lequel une température du gaz de synthèse se situe entre 150 et 500°C avant l'introduction dans le premier module de lit catalytique non refroidi (2).

10. Procédé selon au moins une des revendications 7 à 9, dans lequel la conduite du gaz de synthèse à travers la pluralité de tuyaux de refroidissement (5) et la conduite et l'action laissant réagir le gaz de synthèse ayant partiellement réagi dans les au moins deux modules de lit catalytique refroidis (4, 41, 42) s'effectuent
- à courant parallèle,
- à contre-courant, ou
- dans une combinaison de courant parallèle et contre-courant, notamment dans la pluralité de tuyaux de refroidissement (5) du premier module de lit catalytique refroidi (42) à contre-courant et dans la pluralité de tuyaux de refroidissement (5) des modules de lit catalytique restants (4, 41) à courant parallèle.

11. Procédé selon au moins une des revendications 7 à 10, dans lequel la conduite du gaz de synthèse à travers la pluralité de tuyaux de refroidissement (5) des au moins deux modules de lit catalytique refroidis (4, 41, 42) comprend:
- conduite du gaz de synthèse d'abord à travers la pluralité de tuyaux de refroidissement (5) du dernier module de lit catalytique refroidi (4) situé en aval, ensuite
- conduite du gaz de synthèse à travers la pluralité de tuyaux de refroidissement (5) du module de lit catalytique suivant à chaque fois (41, 42) situé en amont.

12. Procédé selon au moins une des revendications 7 à 11, dans lequel la conduite et le refroidissement du gaz de synthèse ayant partiellement réagi génèrent une vapeur à haute pression avec une pression de 50 à 140 bar.

13. Procédé selon au moins une des revendications 7 à 12, dans lequel l'action laissant réagir le gaz de synthèse ayant partiellement réagi s'effectue au moins dans le dernier module de lit catalytique refroidi (4) situé en aval au niveau d'un catalyseur avec une activité qui se monte au moins au double, de préférence à plus du quintuple et de manière préférée entre toutes à plus du septuple de l'activité d'un catalyseur ferreux usuel.

14. Procédé selon au moins une des revendications 7 à 13, dans lequel la première concentration de sortie en ammoniac du gaz de synthèse ayant partiellement réagi correspond à une part de volume de 5 à 25 %, et dans lequel la seconde concentration de sortie en ammoniac du gaz de produit donne une part de volume de plus de 30 %, notamment jusqu'à 40 %.
